# EUROPÄISCHE PATENTSCHRIFT

(11) **EP 3 306 162 B1**
(45) Veröffentlichungstag und Bekanntmachung des Hinweises auf die Patenterteilung: **05.08.2020**
(21) Anmeldenummer: 17193062.1
(22) Anmeldetag: 26.09.2017
(51) Int. Cl.: F16L 19/10, G01C 3/02

(54) **VORRICHTUNG UND VERFAHREN ZUR MONTAGE EINES SCHNEIDRINGS**
DEVICE AND METHOD FOR FITTING A CUTTING RING
DISPOSITIF ET PROCÉDÉ DE MONTAGE D'UNE BAGUE COUPANTE

(30) Priorität: 10.10.2016 DE 202016105657 U; 17.11.2016 DE 102016122095
(43) Veröffentlichungstag der Anmeldung: 11.04.2018
(73) Patentinhaber: VOSS Fluid GmbH, 51688 Wipperfürth (DE)
(72) Erfinder: PAPENHOFF, Heinz-Werner, 45527 Hattingen (DE); SCHEPPMANN, Sebastian, 58708 Menden (DE)
(74) Vertreter: Patent- und Rechtsanwälte Dr. Solf & Zapf

(56) Entgegenhaltungen:
- WO-A1-2009/003016
- WO-A1-2010/096749
- WO-A1-2016/144723
- US-A1- 2009 299 514

## Beschreibung

Die vorliegende Erfindung betrifft eine Vorrichtung sowie ein Verfahren zur Montage eines Schneidrings an einem Rohr, insbesondere zur Ausbildung einer Rohranschlussverbindung für eine lötlose Rohrverschraubung nach ISO EN 8434-1 (Stand 02/2007), gemäß den Oberbegriffen der Ansprüche 1 und 13. Gattungsgemäße Schneidringverschraubungen sind beispielsweise in DE 40 41 677 A1 und DE 197 09 464 A1 jeweils in spezieller Ausführungsform beschrieben. Im Allgemeinen weist eine Schneidringverschraubung einen Anschlussstutzen, eine auf den Anschlussstutzen aufschraubbare Überwurfmutter sowie einen zwischen Anschlussstutzen und Überwurfmutter angeordneten Schneidring auf. Für die Vormontage eines Schneidrings sind aus dem Stand der Technik unterschiedliche Vorrichtungen bekannt, beispielsweise aus DE 10 2011 053 012 A1 und WO 2013/139641 A1.

Durch die Vormontage kann in erheblichem Maße die Qualität der Schneidringverbindung beeinflusst werden. Wesentliche, qualitätsbestimmende Faktoren sind der Schneidweg in axialer Richtung, die Schneidtiefe in radialer Richtung, der Abstand zwischen Schneidringoberkante und Stirnseite sowie die Ausrichtung des Rohres innerhalb des Montagestutzens. Es gibt bereits unterschiedliche Maßnahmen zur Absicherung der Prozessqualität der Vormontage, die beispielweise aus DE 195 26 136 A1, DE 36 104 27 A1**,** DE 195 75 65 A1 und US 2009/0299514 A1 bekannt sind.

Gleichwohl weisen die aus dem Stand der Technik bekannten Vorrichtungen und Verfahren zur Montage von Schneidringen den Nachteil auf, dass keine ausreichende Prozesssicherheit zur Vermeidung von Ausschuss gewährleistet werden kann.
Der vorliegenden Erfindung liegt daher die Aufgabe zu Grunde, die Vormontage eines Schneidrings dahingehend zu verbessern, dass die Ausschussrate verringert wird.

Die vorgenannte Aufgabe durch eine Vorrichtung zur Montage eines Schneidrings mit den Merkmalen des Kennzeichnungsteils von Anspruch 1 gelöst.
Demnach weist die Vorrichtung einen Montagestutzen mit einer Aufnahmevertiefung zur Aufnahme eines Endbereichs eines Rohrs mit einer Stirnfläche sowie eines auf den Endbereich aufschiebbaren und auf das Rohr zu montierenden Schneidrings auf.

Bei der Vormontage wird zunächst die Überwurfmutter und der Schneidring über den Endbereich des Rohres geschoben und anschließend das Rohr in dem Montagestutzen fixiert. Beim Anziehen der Überwurfmutter oder beim Einpressen der Überwurfmutter mit Schneidring in die Aufnahmevertiefung wirkt der Schneidring derart mit der Aufnahmevertiefung, insbesondere dem Innenkonus, des Montagestutzens zusammen, dass eine im vorderen Bereich des Schneidrings ausgebildete Schneidkante verformt und unter Kerbwirkung formschlüssig und/oder kraftschlüssig in das Material des Rohres eindringt. Vorzugsweise weist die Aufnahmevertiefung zumindest teilweise einen sich in Richtung des Schneidrings erweiternden Innenkonus auf.

Die Vorrichtung ist dadurch gekennzeichnet, dass eine Messeinrichtung vorhanden ist, und dass die Messeinrichtung zum Erfassen der Lage eines in die Aufnahmevertiefung eingeführten Rohres in Bezug auf den Montagestutzen ausgebildet und eingerichtet ist. Mit der Messeinrichtung ist die Lage des Rohres relativ zum Montagestutzen erfassbar. Dadurch wird gewährleistet, dass das Rohr nach dem Eindringen und vor der Montage des Schneidrings in der vordefinierten Lage ist, um eine gewünschte Positionierung des Schneidrings auf dem Endbereich des Rohres zu gewährleisten.

Dabei ist insbesondere vorgesehen, die Eindringtiefe des Rohres und/oder die axiale Ausrichtung des Rohres in Bezug auf den Vormontagestutzen, insbesondere an mindestens einem Zeitpunkt, zu erfassen. Insbesondere erfolgt das Erfassen mit der Messeinrichtung zumindest unmittelbar vor der Montage des Schneidrings. Bevorzugt wird die Lage des Rohres in Bezug auf den Montagestutzen anhand der Lage der Stirnfläche des Rohres ermittelt. Die Messeinrichtung erfasst zumindest die Lage bzw. Position der Stirnfläche des Rohres.

Vorzugsweise ist die Messeinrichtung derart ausgebildet, dass der Zeitpunkt der Erfassung der Lage des Rohres in Bezug auf den Montagestutzen, insbesondere die Lage der Stirnfläche des Rohres, beliebig variierbar ist. Somit ist mit der Messeinrichtung zu jedem vorbestimmten oder vorbestimmbaren Zeitpunkt des Montageprozesses erfassbar, wie das Rohr in dem Montagestutzen positioniert ist. Insbesondere ist mit der Messeinrichtung ein kontinuierliches Zustandssignal bezüglich der Position des Rohres erzeugbar.

Für die Montage eines auf dem Rohr zu montierenden Schneidrings weist die Aufnahmevertiefung des Montagestutzens zweckmäßigerweise eine mittlere Längsachse sowie eine Wandung auf. Dabei ist vorzugsweise vorgesehen, dass die Aufnahmevertiefung zumindest bereichsweise als Innenkonus ausgebildet ist. In einer bevorzugten Ausgestaltung weist die Wandung in einem Bereich eine sich in eine Einführrichtung des in den Montagestutzen einführbaren Rohres verjüngende Konuswandung für die Verformung eines Schneidrings auf, der stirnseitig zumindest eine Schneidkante, dieser gegenüberliegend einen Schneidringanschlag sowie eine Schneidringaußenwandung aufweist. Dabei weist die Schneidringaußenwandung einen konischen, vom Anschlag in Richtung Schneidkante gesehen, sich verjüngenden Bereich auf, der zur Anlage an der Konuswandung der Aufnahmevertiefung ausgebildet ist.
Gemäß einer ersten Ausgestaltung der Vorrichtung ist vorgesehen, dass in der Aufnahmevertiefung mindestens eine Anschlagfläche vorgesehen ist, und das die Messeinrichtung zum Erfassen zumindest des Anliegens der Stirnfläche des Rohres an der Anschlagfläche ausgebildet ist. Die Anschlagfläche ist zur Anlage der Stirnfläche des Rohres ausgerichtet und angeordnet.
Dabei ist vorgesehen, dass die Messeinrichtung zur Erfassung entweder des kraftfreien und/oder des mit einer Kraft beaufschlagten Anliegens an der Anschlagfläche ausgebildet ist. "Mit einer Kraft beaufschlagtes Anliegen" bedeutet, dass von der Stirnfläche des Rohres eine Kraft auf die Anschlagfläche bewirkt wird. Mit der Messeinrichtung ist erfassbar, ob das Rohr mit seiner Stirnfläche beispielsweise an der Anschlagfläche vollständig angelegt ist oder nicht.

Erfindungsgemäß ist die Messeinrichtung zum Erfassen eines Anlageumfangs eingerichtet und ausgebildet. Das bedeutet, mit der Messeinrichtung ist das Ausmaß bzw. der Grad der Anlage der Stirnfläche des Rohres an der Anschlagfläche der Aufnahmevertiefung erfassbar ist. Beispielsweise ist der Anlageumfang zu Werten von 0 bis 100% bestimmbar, wobei 0% überhaupt keine Anlage und 100% die vollständige Anlage der Stirnfläche an der Anschlagfläche darstellt.
Bei vollständiger Anlage der Stirnfläche des Rohres an der Anschlagfläche kann die Montage freigegeben werden, wobei durch das vollständige Anliegen der Stirnfläche sichergestellt ist, dass sich das Rohr in einer vordefinierten Position befindet und der Schneidring somit lagerichtig montiert wird.
Um insbesondere die Position der Stirnfläche des Rohres genau erfassen zu können, ist gemäß einer bevorzugten Ausgestaltung vorgesehen, dass der Montagestutzen mindestens einen Spalt aufweist, dass der Spalt mit einem in die Aufnahmevertiefung eingeführten Rohr, insbesondere mit der Stirnfläche, mittelbar oder unmittelbar zumindest teilweise verschließbar ist, und dass die Messeinrichtung zur Erfassung eines Schließzustandes des Spaltes ausgebildet ist. Über den Schließzustand des Spaltes kann auf die Lage des Rohres in Bezug auf den Montagestutzen geschlossen werden.

Der Spalt wird mittels des Rohres vollständig verschlossen, wenn die Stirnfläche des Rohres und die Anschlagfläche der Aufnahmevertiefung vollständig aneinander anliegen und gleichzeitig Rohrlängsachse und eine Längsachse der Aufnahmevertiefung koaxial zueinander sind. Der Spalt wird folglich genau dann verschlossen, wenn die Stirnfläche rechtwinklig zur Längsachse der Aufnahmevertiefung und die Anschlagfläche rechtwinklig zur Längsachse des Rohres orientiert ist und die beiden Achsen koaxial zueinander sind.

Der Schließzustand des Spaltes beschreibt das Ausmaß bzw. den Grad, mit dem der Spalt verschlossen ist. Beispielsweise ist der Schließzustand zu Werten von 0 bis 100% bestimmbar, wobei 0% bedeutet, dass der Spalt nicht verschlossen ist, und wobei 100% bedeutet, dass der Spalt vollständig geschlossen ist.

Dementsprechend ist mit der Messeinrichtung erfassbar, ob der Spalt in geöffnetem Zustand, in geschlossenem Zustand oder in teilweise geöffnetem bzw. geschlossenem Zustand ist und inwieweit, d. h. zu welchem Grad, z. B. von 0 bis 100%, der ausgesparte Bereich geöffnet bzw. verschlossen ist. Beispielsweise ist die gewünschte Lage des Rohres nicht bei vollständig geschlossenem Spalt, sondern bei zu 80% geschlossenem Spalt erreicht.

Mit der Messeinrichtung ist somit der Schließzustand des ausgesparten Bereichs, insbesondere wertmäßig, erfassbar und beispielsweise ein Zustandssignal diesbezüglich, insbesondere in einem Wertebereich von 0 bis 100%, generierbar. Das Zustandssignal repräsentiert die Lage des Rohres in Bezug auf den Montagestutzen.

Eine bevorzugte Ausgestaltung der Vorrichtung sieht vor, dass die Messeinrichtung einen Abstandssensor aufweist, insbesondere dass der Abstandssensor ein kapazitiver Sensor ist.

Es ist auch vorgesehen, dass mit dem Abstandssensor der Schließzustand des Spaltes, insbesondere die Höhe des Spaltes, erfasst wird. Der Abstandssensor ist dazu dem Spalt zugeordnet und erfasst dessen Schließzustand, beispielsweise zumindest zu einem Zeitpunkt vor der Montage des Schneidrings. Der von der Messeinrichtung messbare Abstand, repräsentiert dabei den Schließzustand des Spalts bzw. den Grad der Anlage der Stirnfläche an der Anschlagfläche. Somit ist jedem Abstandswert ein Wert für den Schließzustand bzw. den Grad der Anlage des Rohres zugeordnet bzw. zuordenbar. Wenn der Spalt durch entsprechendes Anpressen des Rohres vollständig geschlossen ist, d. h. wenn die Stirnfläche der Rohr vollständig an der Anschlagfläche anliegt, ist der gemessene Abstand gleich Null oder annähernd Null. Der Abstand steigt, je weiter der Grad der Anlage des Rohres abnimmt. Bei vollständig geöffnetem Spalt, bzw. wenn das Rohr gar nicht an der Anschlagfläche anliegt, ist lediglich ein Ausgangswert für den Abstand messbar. Aus den Abstandswerten ergibt sich entsprechend der Wertebereich für den Schließzustand bzw. für den Grad der Anlage des Rohres, auf Basis dessen beispielsweise ein Zustandssignal erzeugbar ist.

Vorzugsweise ist der Abstandssensor ein kapazitiver Sensor mit einer Leiterplatte mit zwei konzentrischen Elektroden. Besonders bevorzugt bildet der kapazitive Sensor den frequenzbestimmenden Teil eines Schwingkreises.

Es hat sich zudem als vorteilhaft herausgestellt, wenn gemäß einer Weiterbildung vorgesehen ist, in der Aufnahmevertiefung ein Anschlagelement gehalten ist, dass der Spalt zwischen Anschlagelement und Montagestutzen, insbesondere zwischen Anschlagelement und Bodenfläche der Aufnahmevertiefung, ausgebildet ist, und dass der Schließzustand des Spaltes durch Krafteinwirkung des Rohres auf das Anschlagelement beeinflussbar ist. Das Anschlagelement ist beispielsweise innerhalb der Aufnahmevertiefung derart gehalten, dass seine in Richtung des Rohres gewandte Oberfläche als Anschlagfläche für die Stirnfläche des Rohres dient. Dabei ist das Anschlagelement mittels des Rohres entlang der Längsachse des Montagestutzens verschiebbar gehalten.

Der Spalt ist vorzugsweise zwischen dem Anschlagelement und der Bodenfläche der Aufnahmevertiefung ausgebildet und durch Verschiebung des Anschlagelements mittels der Rohrleitung verschließbar. Das Rohr ist insbesondere dann in der vorbestimmten Lage zur Montage des Schneidrings, wenn das Rohr mit seiner Stirnfläche vollständig unter Wirkung einer Kraft an der Anschlagfläche auf dem Anschlagelement anliegt und der Spalt vollständig oder zu einem bestimmten Anteil geschlossen ist.

Ferner ist gemäß einer Ausgestaltung vorteilhaft, wenn das Anschlagelement unter Wirkung einer Feder, insbesondere einer Wellfeder, in der Aufnahmevertiefung gehalten ist. Vorzugsweise weist das Anschlagelement eine Öffnung auf, die von einem Führungsmittel, z. B. einem Bolzen oder einer Schraube, durchtreten wird, so dass das Anschlagelement parallel zur Längsachse des Montagestutzens entlang des Führungsmittels bewegbar ist. Zwischen der Bodenfläche der Aufnahmevertiefung und dem Anschlagelement ist die Feder angeordnet, die das Anschlagelement von der Bodenfläche beabstandet und dadurch den Spalt ausbildet. Eine Bewegung des Anschlagelements - durch das Rohr - bei der der Spalt geschlossen wird, erfolgt stets entgegen der Kraft der Feder. Beim Einführen des Rohres wird die Feder komprimiert und der Spalt - zumindest teilweise - geschlossen.

Die Kraftübertragung von der Feder auf das Anschlagelement wird insbesondere verbessert, wenn die Feder eine Wellfeder ist.

Eine Ausgestaltung der Vorrichtung sieht vor, dass die Messeinrichtung mindestens eine Pumpe und einen Drucksensor oder ein Durchflussmesser aufweist. Das Einführen des Rohres in die Aufnahmevertiefung führt beispielsweise zur Änderung eines durch die Pumpe hervorgerufenen Druckes, der mittels des Drucksensors erfasst wird, oder einer Änderung der Durchflussrate, die mit dem Durchflussmesser erfasst wird, wodurch auf die Position bzw. Lage des Rohres geschlossen werden kann.

Eine bevorzugte Weiterbildung sieht vor, der Spalt als mindestens ein Durchgangskanal ausgestaltet ist, der sich ausgehend von einer Bodenfläche der Aufnahmevertiefung durch den Montagestutzen nach außen erstreckt, wobei der Durchgangskanal derart ausgebildet ist, dass er durch die Stirnseite des in die Aufnahmevertiefung eingeführten Rohres verschließbar ist. Dies ist insbesondere dann der Fall, wenn die Stirnfläche des Rohres und die Anschlagfläche aneinander anliegen und gleichzeitig die Rohrlängsachse und die Längsachse der Aufnahmevertiefung koaxial zueinander sind. Die Bodenfläche der Aufnahmevertiefung ist dabei die Anschlagfläche für die Stirnfläche des Rohres.
Die Messeinrichtung weist bei dieser Ausgestaltung eine Pumpe und einen Drucksensor oder einen Durchflussmesser auf. Die Pumpe steht mit dem Durchgangskanal in Verbindung, so dass mit der Pumpe eine Strömung erzeugbar ist, die den Durchgangskanal durchströmen kann. Dabei ist mit dem Drucksensor ein Druckanstieg bzw. mit dem Durchflussmesser eine reduzierte Durchflussrate ermittelbar, wenn der Durchgangskanal durch das Rohr zumindest teilweise verschlossen ist. Ist der Durchgangskanal durch die Stirnseite des Rohres verschlossen, ist dessen Lage bekannt.

Der von der Messeinrichtung messbare Druck, z. B. am Ausgang der Pumpe, bzw. die reduzierte Durchflussrate repräsentiert den Schließzustand des Durchgangskanals bzw. den Grad der Anlage der Stirnfläche des Rohres an der Anschlagfläche. Somit ist jedem Druckwert bzw. jeder Durchflussrate ein Wert für den Schließzustand bzw. den Grad der Anlage des Rohres zugeordnet bzw. zuordenbar. Wenn der Durchgangskanal durch das Rohr vollständig verschlossen ist bzw. wenn die Stirnfläche des Rohres vollständig an der Anschlagfläche anliegt, ist ein maximaler Druck messbar bzw. eine minimale Durchflussrate. Der Druck nimmt ab bzw. die Durchflussrate zu, je weiter der Durchgangskanal geöffnet ist bzw. je weiter der Grad der Anlage des Rohres abnimmt. Bei vollständig geöffnetem Durchgangskanal bzw. wenn das Rohr gar nicht an der Anschlagfläche anliegt, ist nur ein Minimaldruck bzw. ein maximaler Durchfluss messbar. Aus den messbaren Druckwerten bzw. Durchflussraten ergibt sich entsprechend der Wertebereich für den Schließzustand bzw. für den Grad der Anlage des Rohres, auf Basis dessen insbesondere ein Zustandssignal erzeugbar ist.

Gemäß einer weiteren Ausgestaltung ist vorgesehen, dass die Messeinrichtung ein Zustandssignal erzeugt, und dass die Montage des Schneidrings an dem Rohr auf Basis des Zustandssignals gesteuert wird, insbesondere dass ein Steuergerät vorhanden ist, und dass Zustandssignal mit dem Steuergerät verarbeitbar und die Montage mit dem Steuergerät gesteuert wird. Die Steuerung beinhaltet insbesondere, dass der Montagevorgang automatisiert in Gang setzbar und/oder für eine die Vorrichtung bedienende Bedienperson freigebbar ist, wenn der Spalt in geschlossenem Zustand ist, oder der Montagevorgang blockierbar ist, wenn der Spalt in geöffnetem Zustand oder ungleichmäßig geschlossen ist.

Dies bewirkt, dass der Montagevorgang nur dann ausführbar oder auslösbar ist, wenn das Rohr mit seiner Stirnfläche vollständig an der Anschlagfläche in der Aufnahmevertiefung im Montagestutzen anliegt, d. h. wenn das Rohr derart positioniert ist, dass eine ordnungsmäße Schneidringverbindung herstellbar ist. Dementsprechend ist sichergestellt, dass der Montagevorgang blockiert ist, wenn das Rohr mit seiner Stirnfläche nicht ausreichend an der Anschlagfläche anliegt, d. h. wenn das Rohr derart positioniert ist, dass der Montagevorgang wohl einen Ausschuss ergeben würde.

Zweckmäßigerweise ist die Messeinrichtung mit einer Auswerteeinheit verbunden. Mit der Auswerteeinheit ist das Zustandssignal auswertbar und darauf basierend ein Steuersignal erzeugbar. Das Steuersignal wiederrum ist dem Steuergerät zuführbar, so dass wie bereits beschrieben mit dem Steuergerät das Zustandssignal der Messeinrichtung verarbeitbar ist.

Gemäß einer weiteren Ausgestaltung der Vorrichtung ist vorgesehen, dass basierend auf dem Zustandssignal ein optisches und/oder akustisches Informationssignal für eine Bedienperson bezüglich der Anlage der Stirnfläche des Rohres an der Anschlagfläche erzeugbar ist. Dies kann beispielsweise ein Warnton oder eine Warnlicht sein, wenn das Rohr nicht ausreichend bzw. teilweise an der Anschlagfläche anliegt. Des Weiteren kann das Informationssignal ein Freigabeton oder -licht sein, mittels dem signalisierbar ist, dass der Montagevorgang ausgelöst werden kann, wenn die Stirnfläche des Rohres vollständig an der Anschlagfläche anliegt.

Gemäß einer weiteren Ausgestaltung weist die Vorrichtung einen Werkzeugträger auf, auf dem der Montagestutzen lagerbar ist. Der Werkzeugträger weist eine Einrichtung zur Datenbereitstellung, insbesondere einen RFID-Transponder oder Barcode, auf. Mit der Einrichtung zur Datenbereitstellung ist beispielsweise der auf dem Werkzeugträger befindliche Montagestutzen identifizierbar und/oder es sind Parameter für den durchzuführenden Montagevorgang auslesbar.

Besonders bevorzugt ist mit der erfindungsgemäßen Vorrichtung, z. B. mit der Messeinheit und/oder der Auswerteeinheit, ein binäres Signal erzeugbar, sobald der Druck am Ausgang der Pumpe einen bestimmbaren Grenzwert übersteigt. Dieser Grenzwert repräsentiert einen ausreichenden Schließzustand bzw. einen ausreichenden Grad der Anlage der Stirnfläche an der Anschlagfläche, auf Basis dessen eine ordnungsgemäße Schneidringverbindung herstellbar ist.

Zweckmäßigerweise ist der Grenzwert in der Steuereinheit oder in der Auswerteeinheit oder in der Einrichtung zur Datenbereitstellung hinterlegt. Gemäß einer vorteilhaften Weiterbildung ist vorgesehen, dass, z. B. mit der Steuereinheit oder mit der Auswerteeinheit, eine Rechteckschwingung generierbar ist, deren Frequenz stetig von der axialen Höhenerstreckung des Spalts abhängt. Die Frequenz ist von einem Mikroprozessor auswertbar.

Vorzugsweise ist mit dem Mikroprozessor jedem Frequenzwert ein Kennwert zuordenbar, der die Höhenerstreckung des Spalts repräsentiert, so dass ein Grenzwert für die Freigabe des Montageprozesses bestimmbar ist. Besonders bevorzugt ist mit der erfindungsgemäßen Vorrichtung, z. B. mit der Steuereinheit oder mit der mit der Auswerteeinheit, ein binäres Signal erzeugbar, sobald die Frequenz den Grenzwert übersteigt. Der Grenzwert repräsentiert dabei einen ausreichenden Schließzustand bzw. einen ausreichenden Grad der Anlage der Stirnfläche an der Anschlagfläche. Zweckmäßigerweise ist der Grenzwert in der Steuereinheit oder in der Auswerteeinheit hinterlegt oder mit der Einrichtung zur Datenbereitstellung identifizierbar.

Zusätzlich oder alternativ ist gemäß einer Weiterbildung die Vorrichtung derart ausgebildet und eingerichtet, dass mit der Messeinrichtung die Anpresskraft des Rohres gegen die Anschlagfläche messbar ist. Dabei repräsentiert die Anpresskraft den Grad der Anlage der Stirnfläche an der Anschlagfläche, wobei jeder Wert der Anpresskraft einen Wert für den Grad der Anlage darstellt. Über die Anpresskraft ist somit ebenfalls wie beschrieben das Zustandssignal erzeugbar.

Vorteilhaft bei der erfindungsgemäßen Vorrichtung ist, dass mit dem Zustandssignal zumindest die vollständige Anlage, d. h. einen Montageerfolg repräsentierende Positionierung, der Stirnfläche signalisierbar ist, so dass der Montagevorgang des Schneidrings an der Rohr basierend auf dem Zustandssignal erfolgen, insbesondere gesteuert werden kann. Dadurch kann die Produktion von Rohren mit einer den Anforderungen an die Dichtigkeit von Hochdruckhydraulikverbindungen entsprechende Schneidringverbindung sichergestellt werden und ein Ausschuss aufgrund von unzureichend angeordneten Rohren verhindert werden. Die erfindungsgemäße Aufgabe wird zudem durch ein Verfahren zur Montage eines Schneidrings an einem Rohr mit den kennzeichnenden Merkmalen von Anspruch 12 gelöst. Demnach weist das Verfahren folgende Verfahrensschritte auf:
- Aufstecken eines zu montierenden Schneidrings, aufweisend zumindest eine Schneidkante, auf einen Endbereich eines Rohres mit einer Rohrlängsachse und einer am Endbereich ausgebildeten Stirnfläche,
- Einführen des Endbereichs mitsamt dem Schneidring in eine Aufnahmevertiefung eines Montagestutzens in einer Einführrichtung, wobei die Aufnahmevertiefung eine mittlere Längsachse und eine Wandung aufweist,
- Beaufschlagen des Schneidrings mit einer, vorzugsweise von einer Presseinrichtung erzeugten, Montagekraft, so dass die Schneidkante des Schneidrings in das Rohr eindringt,
- wobei vor dem Beaufschlagen des Schneidrings mit einer Montagekraft ein Erfassen einer Lage des Rohres in Bezug auf den Montagestutzen mit einer Messeinrichtung erfolgt.

Eine Ausgestaltung des Verfahrens sieht vor, dass mit der Messeinrichtung die Anlage der Stirnfläche der Rohrleitung an einer Anschlagsfläche in der Aufnahmevertiefung erfasst wird. Die Anlage der Stirnfläche des Rohres an der Anschlagsfläche wird an zumindest einem Zeitpunkt gemessen. Vorzugsweise wird die Anlage der Stirnfläche zu beliebig variierbaren Zeitpunkten erfasst. Somit kann mit der Messeinrichtung zu jedem vorbestimmten oder vorbestimmbaren Zeitpunkt des Montageprozesses gemessen werden, ob das Rohr mit seiner Stirnfläche an der Anschlagfläche vollständig anliegt oder nicht.
Insbesondere wird mit der Messeinrichtung ein kontinuierliches Zustandssignal bezüglich der Anlage der Stirnfläche erzeugt, insbesondere über einen bestimmten Zeitraum, z. B. während des Pressens.

Entsprechend der erfindungsgemäßen Ausgestaltung des Verfahrens wird mit der Messeinrichtung auch ein Anlageumfang gemessen. Das bedeutet, die Messeinrichtung erfasst das Ausmaß bzw. den Grad der Anlage der Stirnfläche des Rohres an der Anschlagfläche. Beispielsweise wird der Anlageumfang zu Werten von 0 bis 100% bestimmt, wobei 0% überhaupt keine Anlage und 100% die vollständige Anlage der Stirnfläche an der Anschlagfläche darstellt.
Ferner hat sich gemäß einer Ausgestaltung des Verfahrens aus vorteilhaft erwiesen, wenn vorgesehen ist, dass das Beaufschlagen des Schneidrings mit einer Montagekraft freigegeben wird, wenn die Messeinrichtung ein vollständiges Anliegen der Stirnfläche des Rohres an einer Anschlagfläche in der Ausnahmevertiefung erfasst. Dadurch wird sichergestellt, dass das Rohr und der Schneidring der bei Montage in der ordnungsgemäßen Position sind und richtig montiert werden. Insbesondere ist vorgesehen, dass ein Zustandssignal von der Messeinrichtung erzeugt wird und, z. B. mit einem Steuergerät, verarbeitet wird, wobei der Montagevorgang des Schneidrings an dem Rohr auf Basis des Zustandssignals gesteuert wird. Die Steuerung beinhaltet insbesondere, dass der Montagevorgang automatisiert in Gang gesetzt und/oder für eine die Vorrichtung bedienende Bedienperson freigegeben wird, wenn die Stirnfläche der Rohr vollständig an der Anschlagfläche der Aufnahmevertiefung im Montagestutzen anliegt, oder der Montagevorgang blockiert wird, wenn dies nicht der Fall ist.
Dadurch wird der Montagevorgang nur dann ausgeführt oder ausgelöst, wenn das Rohr derart positioniert wird, dass der Montagevorgang eine zuverlässige Schneidringverbindung erzeugt. Dementsprechend ist sichergestellt, dass der Montagevorgang blockiert wird, wenn das Rohr mit seiner Stirnfläche nicht ausreichend an der Anschlagfläche angelegt wird.

Gemäß einer weiteren Ausgestaltung des Verfahrens ist vorgesehen, dass die Messeinrichtung die Anlage der Stirnfläche des Rohres an der Anschlagfläche mit einem kapazitiven Sensor erfasst. Auf Basis der gemessenen Werte wird insbesondere ein Zustandssignal für den Grad der Anlage des Rohres erzeugt.

Gemäß einer alternativen Ausgestaltung des Verfahrens ist vorgesehen, dass die Anlage der Stirnfläche des Rohres an der Anschlagfläche als Änderung eines mit einer Pumpe erzeugten Druckes mit der Messeinrichtung, insbesondere mit einem Drucksensor, erfasst wird.

Vorzugsweise ist dabei vorgesehen, dass die Pumpe eine Luftströmung in einem Durchgangskanal, der sich ausgehend von der Anschlagfläche der Aufnahmevertiefung durch den Montagestutzen nach außen erstreckt, erzeugt. Der Durchgangskanal kann durch die Stirnfläche des Rohres verschlossen werden, wenn die Stirnfläche vollständig an die Anschlagfläche angelegt wird. Dies ist insbesondere dann der Fall, wenn die Stirnfläche des Rohres und die Anschlagfläche in der Aufnahmevertiefung aneinander anliegen und gleichzeitig die Rohrlängsachse und die Längsachse der Aufnahmevertiefung bzw. des Montagestutzens koaxial zueinander sind.

Der von der Messeinrichtung gemessene Druck, z. B. am Ausgang der Pumpe, repräsentiert den Schließzustand des Durchgangskanals bzw. den Grad der Anlage der Stirnfläche an der Anschlagfläche.

Auf diese Weise wird ermöglicht, dass das Rohr im Montagestutzen korrekt ausgerichtet werden kann, bevor der Montagevorgang ausgelöst wird. Dadurch wird mit dem erfindungsgemäßen Verfahren die Herstellung von Ausschuss, z. B. durch schief im Montagestutzen angelegte Rohre, vermieden.

Weitere vorteilhafte Ausbildungen der Erfindung sind in den Unteransprüchen enthalten. Anhand der in den beiliegenden Zeichnungen dargestellten Ausführungsbeispiele wird die Erfindung genauer erläutert. Es zeigen:
- Fig. 1: eine erste Ausführungsform einer erfindungsgemäßen Vorrichtung in schematischer Schnittdarstellung,
- Fig. 2: die Vorrichtung gemäß Fig. 1 mit eingeführtem Rohr,
- Fig. 3: einen Sensor der Vorrichtung gemäß Fig. 1 in Aufsicht,
- Fig. 4: eine zweite Ausführungsform einer erfindungsgemäßen Vorrichtung in schematischer Schnittdarstellung,
- Fig. 5: eine Ausführungsform einer erfindungsgemäßen Vorrichtung in schematischer Schnittdarstellung,
- Fig. 6: eine Volumenstrom-Druck-Kennlinie zur Vorrichtung gemäß Fig. 4 und Fig. 5,
- Fig. 7: eine erfindungsgemäß hergestellte Schneidringverbindung in schematischer Schnittdarstellung, und
- Fig. 8: ein schematischer Ablauf eines Ausführungsbeispiels des Verfahrens.

In den verschiedenen Figuren der Zeichnung sind gleiche Teile stets mit denselben Bezugszeichen versehen.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

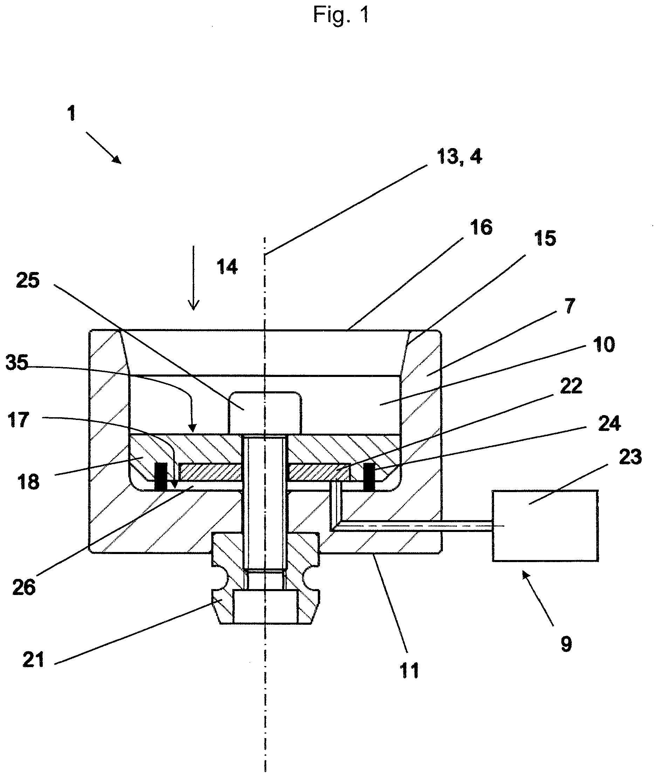

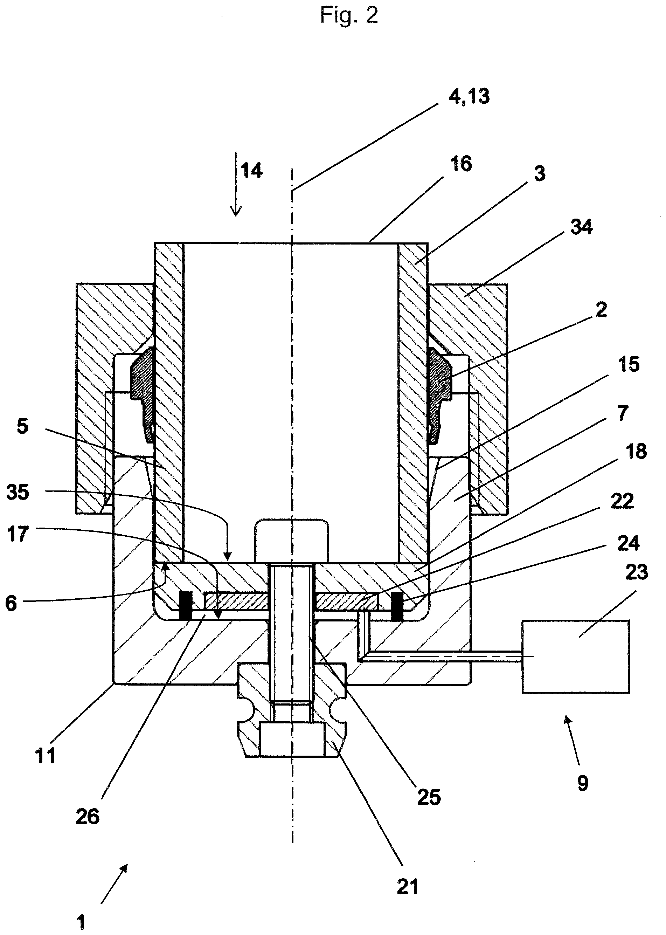

Fig. 1 zeigt ein erstes Ausführungsbeispiel einer erfindungsgemäßen Vorrichtung 1 zur Montage eines Schneidrings 2 an einem Rohr 3 mit einer Rohrlängsachse 4 und einer an einem Endbereich 5 ausgebildeten Stirnfläche 6 (Schneidring 2 und Rohr 3 sind beispielsweise in Fig. 2 dargestellt). Die Vorrichtung 1 weist einen Montagestutzen 7, ein in einer Aufnahmevertiefung 10 angeordnetes Anschlagelement 18, einen Zapfen 21 zur Verbindung mit einem Werkzeugträger (nicht dargestellt), eine Schraube 25 zur Führung des Anschlagelements sowie eine Messeinrichtung 9 auf.

Der Montagestutzen 7 weist eine zentrale Aufnahmevertiefung 10 zur Aufnahme des Endbereichs 5 des Rohres 3 sowie - zumindest teilweise - des auf den Endbereich 5 aufschiebbaren und auf dem Rohr 3 zu montierenden Schneidrings 2 auf. Zudem weist der Montagestutzen 7 bei diesem Ausführungsbeispiel an seiner Unterseite 11 eine zylindrische Aussparung zur Aufnahme des Zapfens 21 auf.

Die Aufnahmevertiefung 10 weist eine Längsachse 13, eine sich in eine Einführrichtung 14 erstreckende Wandung 15, eine Öffnung 16, durch die das Rohr 3 einführbar ist, sowie eine Bodenfläche 17 auf. Die Wandung 15 ist im Bereich der Öffnung 16 als Innenkonus ausgebildet und ist im weiteren Verlauf in Richtung der Unterseite 11 als Kreiszylinder ausgebildet. Die Bodenfläche 17 weist eine bis zur Unterseite 11 des Montagestutzens 7 durchgehende Durchgangsöffnung auf, die von der Schraube 25 als Führungsmittel durchtreten wird. Die Schraube 25 ist mittels des Zapfens 21 gesichert.

Das Anschlagelement 18 ist zylindrisch ausgebildet und weist ebenfalls eine Durchgangsöffnung auf, die von der Schraube 25 durchtreten wird. Die in Richtung der Öffnung 16 orientierte Seite des Anschlagselements 18 ist die Anschlagfläche 35 für das Rohr 3, insbesondere dessen Stirnseite 6. Die von der Öffnung 16 abgewandte Seite des Anschlagselements 18 weist eine zylindrische Ausnehmung auf, in der ein Sensor 22 angeordnet ist, der bei diesem Ausführungsbeispiel ein kapazitiver Sensor 22 ist. Dabei fluchtet die Oberfläche des Sensors 22 mit der Oberfläche des Anschlagelements 18. An der von der Öffnung 16 abgewandten Seite des Anschlagelements 18 ist des Weiteren eine um die zylindrische Ausnehmung konzentrisch verlaufende Nut ausgebildet, in der eine Wellfeder 24 angeordnet ist.

Der Zapfen 25 dient zur Verbindung des Montagestutzens 7 mit einem - in Fig. 1 nicht dargestellten - Werkzeugträger sowie zur Halterung des Anschlagelements 18 innerhalb der Aufnahmevertiefung 10. Hierzu weist der Zapfen 21 ein Innengewinde auf, in das die Schraube 25 das Anschlagelement 18 durchgreifend einschraubbar ist. Außerdem kann der Zapfen 21 eine RFID-Einheit - nicht dargestellt - aufweisen. Die Messeinrichtung 9 weist einen in der zylindrischen Ausnehmung des Anschlagelements 18 angeordneten kapazitiven Sensor 22, insbesondere Abstandssensor, sowie eine mit dem Sensor 22 verbundene, außerhalb des Montagestutzens 7 angeordnete Auswerteeinheit 23 auf. Zweckmäßigerweise ist der Sensor 22 derart ausgebildet, dass seine von der Öffnung 16 abgewandte Seite mit der Bodenfläche 17 des Montagestutzens 7 fluchtet.

Im montierten Zustand der Vorrichtung 1 ist das Anschlagelement 18 derart in der Aufnahmevertiefung 10 angeordnet, dass es entlang der Schraube 25 parallel zur Längsachse 13 bewegbar ist. Das heißt, der im Anschlagelement 18 angeordnete Sensor 22 weist in Richtung Bodenfläche 17 der Aufnahmevertiefung 10. Dabei liegt die Wellfeder 24 auf der Bodenfläche 17 auf, so dass der Montagestutzen 7 und das Anschlagelement 18 unter Ausbildung eines Spalts 26 voneinander beabstandet sind. Der Spalt 26 ist dabei von der Bodenfläche 17 sowie von der Oberfläche des Sensors 22 bzw. der von der Öffnung abgewandten Seite des Anschlagelements 18 begrenzt.

Auf der Unterseite 11 des Montagestutzens ist der Zapfen 21 eingesetzt, wobei die jeweiligen Durchgangsöffnungen in dem Montagestutzen 7, im Anschlagelement 18 und im Zapfen 21 miteinander fluchten. In die Durchgangskanäle ist die Schraube 25 aus Richtung der Aufnahmevertiefung 10 eingeschraubt, so dass das Anschlagelement 18 in der vorstehend beschriebenen Position in der Aufnahmevertiefung 10 gehalten ist. Aufgrund einer vorbestimmten Höhenerstreckung sowie der Federkraft der Wellfeder 24 ist das Anschlagelement 18 in axialer Richtung relativ zum Montagestutzen 7 bewegbar.

Aufgrund dieser Ausgestaltung ist durch Anpressen des Rohres 3 gegen die Anschlagfläche 35 der Spalt 26, insbesondere dessen axiale Höhenerstreckung, beeinflussbar, insbesondere verringerbar. Dadurch ist der Spalt 26 bei Aufwendung einer bestimmten Anpresskraft mittelbar verschließbar. Der Spalt 26 ist nur dann vollständig verschließbar, wenn die Stirnfläche 6 des Rohres 3 und die Anschlagfläche 35 aneinander anliegen und gleichzeitig die Rohrlängsachse 4 und die Längsachse 13 der Aufnahmevertiefung 10 koaxial zueinander sind. In dieser Lage des Rohres 3 relativ zum Montagestutzen 7 ist dann gewährleistet, dass der Schneidring 2 ordnungsgemäß montiert werden kann.

Da der Sensor 22 der Messeinrichtung 9 derart angeordnet ist, dass er den Spalt 26 oberseitig begrenzt, wird der Sensor 22 beim Verschließen des Spalts 26 auf die Bodenfläche 17 zu bewegt. Mit dem Sensor 22 ist somit der Schließzustand des Spalts 26 erfassbar und, insbesondere als Zustandssignal, an die Auswerteeinheit 23 weiterleitbar. Dadurch ist auf Basis des Schließzustands des Spalts 26 der Grad der Anlage der Stirnfläche 6 des Rohres 3 an der Anschlagfläche 35 messbar bzw. sichergestellt, dass sich das Rohr 3 in einer bestimmten Position befindet, nämlich mit dem Endbereich 5 ausreichend in die Aufnahmevertiefung 10 eingeschoben ist, um eine ordnungsgemäße Montage des Schneidrings 2 zu gewährleisten.

Die Vorrichtung 1 ermöglicht somit insbesondere, dass die Anlage der Stirnfläche 6 des Rohres 3 an der Anschlagfläche 35 bzw. der Grad der Anlage signalisierbar bzw. messbar ist. Basierend darauf kann der Montagevorgang des Schneidrings 2 ausgelöst, freigegeben oder blockiert werden, so dass eine Herstellung einer mangelhaften Schneidringverbindung verhindert wird.

In Fig. 2 ist die Vorrichtung 1 gemäß Fig. 1 dargestellt. In Fig. 2 ist ein Rohr 3 in den Montagestutzen 7 eingeführt. Das Rohr 3 liegt in der gezeigten Darstellung an der Anschlagfläche 35 des Anschlagelementes 18 an, allerdings ist das Anschlagelement 18 noch nicht bewegt worden. Auf den Endbereich 5 sind der Schneidring 2 und eine Überwurfmutter 34 aufgeschoben.

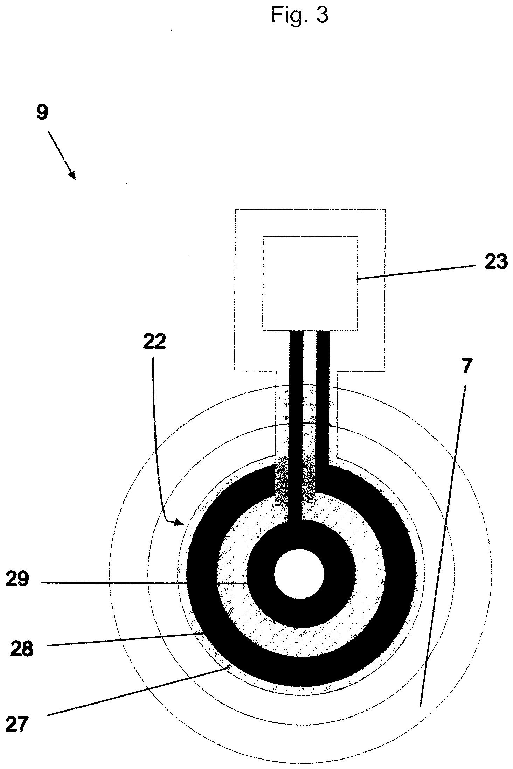

Fig. 3 ist eine Darstellung der Messeinrichtung 9 mit dem im Montagestutzen 7 angeordneten Sensor 22 und der Auswerteeinheit 23. Der Sensor 22 ist als kapazitiver Sensor 22 ausgebildet, aufweisend eine Leiterplatte 27 mit zwei konzentrischen Elektroden 28, 29. Mit dem Sensor 22 ist wie beschrieben die Höhe des Spaltes 26 zwischen Sensor 22 und Bodenfläche 17 messbar, so dass von der Messeinrichtung 9 der Schließzustand des Spalts 26 ermittelbar ist.

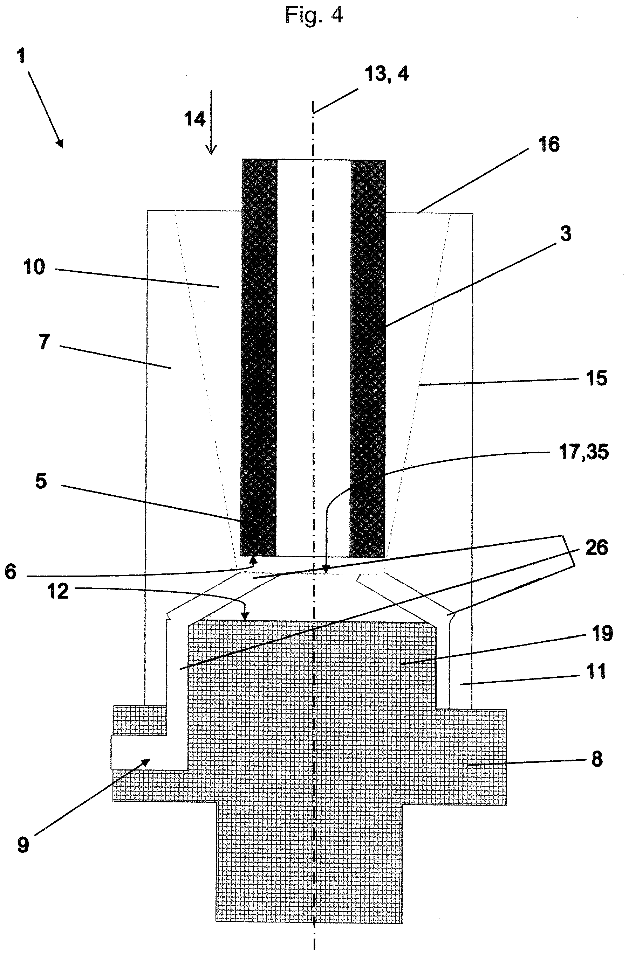

Fig. 4 zeigt ein weiteres Ausführungsbeispiel einer erfindungsgemäßen Vorrichtung 1 zur Montage eines Schneidrings 2. Die Vorrichtung 1 weist in diesem Ausführungsbeispiel einen Montagestutzen 7, einen Werkzeugträger 8 sowie eine Messeinrichtung 9 auf. Im Unterschied zum vorangegangenen Ausführungsbeispiel ist jedoch kein Anschlagelement 18 vorgesehen, sondern der Spalt 26 ist in Form von mehreren Durchgangskanälen ausgebildet.

Der Montagestutzen 7 weist eine Aufnahmevertiefung 10 zur Aufnahme des Endbereiches 5 des Rohres 3 sowie des auf den Endbereich 5 aufschiebbaren und auf dem Rohr 3 zu montierenden Schneidrings 2 auf. Zudem weist der Montagestutzen 7 an seiner Unterseite 11 eine Werkzeugträgeraufnahme 12 auf, in die der Werkzeugträger 8 formschlüssig einführbar ist.

Die Aufnahmevertiefung 10 ist als Innenkonus ausgebildet und weist eine Längsachse 13, eine sich in eine Einführrichtung 14 des Rohres 3 verjüngende Wandung 15, eine Öffnung 16, durch die das Rohr 3 einführbar ist, sowie eine Bodenfläche 17 auf. Die Bodenfläche 17 ist bei diesem Ausführungsbeispiel gleichzeitig die Anschlagfläche 35, an der die Stirnfläche 6 des Rohres 3 vollständig anlegbar ist.

Der Werkzeugträger 8 weist einen Grundkörper mit einem in die Werkzeugträgeraufnahme 12 einführbaren zylindrischen Vorsprung 19 sowie einem sich daran anschließenden vom Vorsprung 19 abstehenden ringförmigen Lagerabschnitt mit einer in Richtung Vorsprung 19 weisenden Lagerfläche 20 auf. Außerdem kann der Werkzeugträger eine RFID-Transponder - nicht dargestellt - aufweisen.

Wesentlich bei diesem Ausführungsbeispiel ist, dass die als Durchgangskanäle ausgebildeten Spalte 26 vorgesehen sind. Die Vorrichtung 1 weist im dargestellten Beispiel zwei als Durchgangskanäle ausgebildete Spalte 26 auf. Es liegt jedoch auch im Rahmen der Erfindung, dass lediglich ein als Durchgangskanal ausgebildeter Spalt 26 oder eine Mehrzahl, vorzugsweise drei, vier, fünf oder sechs als Durchgangskanäle ausgebildete Spalte 26 vorhanden sind.

Die als Durchgangskanäle ausgebildeten Spalte 26 erstrecken sich von der Anschlagfläche 35 bzw. der Bodenfläche 17 des Montagestutzens 7 durch diesen sowie durch den Werkzeugträger 8 hindurch bis zur Außenseite der Vorrichtung 1.

Die einzelnen als Durchgangskanäle ausgebildeten Spalte 26 sind innerhalb der Vorrichtung 1, z. B. im Bereich des Werkzeugträgers 8 miteinander verbunden, so dass sie einen zusammenhängenden Strömungskanal für ein Fluid, insbesondere Luft, bilden.

Es liegt jedoch auch im Rahmen der Erfindung, dass die als Durchgangskanäle ausgebildeten Spalte 26 jeweils voneinander unabhängige Strömungskanäle bilden, die sich jeweils von der Anschlagfläche 35 nach Außen erstrecken.

Die als Durchgangskanäle ausgebildeten Spalte 26 sind jeweils derart angeordnet, dass sie durch die Stirnfläche 6 des Rohres 3 verschließbar sind, wenn die Stirnfläche 6 vollständig an der Anschlagfläche 35 der Aufnahmevertiefung 10 anliegt. Dies ist insbesondere dann der Fall, wenn die Stirnfläche 6 und die Anschlagfläche 35 plan aneinander anliegen und gleichzeitig die Rohrlängsachse 4 und die Längsachse 13 koaxial zueinander sind.

Die Messeinrichtung 9 weist bei diesem Ausführungsbeispiel eine Pumpe und einen Drucksensor - nicht dargestellt - auf. Pumpe und Drucksensor sind am werkzeugträgerseitigen Austritt der als Durchgangskanäle ausgebildeten Spalte 26 nach außen anschließbar, so dass die Pumpe mit den als Durchgangskanälen ausgebildeten Spalten 26 fluiddicht verbunden ist. Dadurch ist mit der Pumpe eine Luftströmung erzeugbar, die die Spalte 26 durchströmen kann. Dabei ist mit dem Drucksensor ein Druckanstieg ermittelbar, wenn die Spalte 26 durch das Rohr 3 zumindest teilweise verschlossen sind.

Der von der Messeinrichtung 9 messbare Druck repräsentiert den Schließzustand der Spalte 26 durch das Rohr 3. Daraus ist der Grad der Anlage der Stirnfläche 6 bzw. die vollständige Anlage an der Anschlagfläche 35 ermittelbar. Aus den messbaren Druckwerten ergeben sich somit entsprechende Werte für den Grad der Anlage des Rohres 3 an der Anschlagfläche 35. Der jeweilige Wert ist mittels des Zustandssignals signalisierbar bzw. als Zustandssignal messbar.

Die erfindungsgemäße Vorrichtung ermöglicht somit auch mit diesem Ausführungsbeispiel, dass der die Anlage, insbesondere der Grad der Anlage, der Stirnfläche 6 des Rohres 3 an der Anschlagfläche 35 erfassbar bzw. messbar ist. Basierend darauf kann der Montagevorgang des Schneidrings 2 ausgelöst, freigegeben oder blockiert werden, so dass eine Herstellung einer mangelhaften Schneidringverbindung verhinderbar ist.

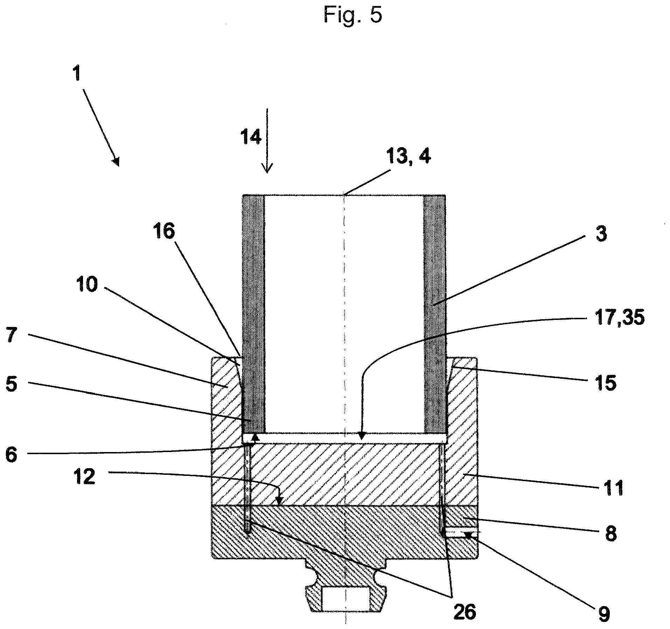

Fig. 5 zeigt ein weiteres Ausführungsbeispiel einer Vorrichtung 1 zur Montage eines Schneidrings 2. Die Vorrichtung 1 weist in diesem Ausführungsbeispiel einen Montagestutzen 7, einen Werkzeugträger 8 sowie eine Messeinrichtung 9 auf. Der Spalt 26 ist auch hier in Form von mehreren Durchgangskanälen ausgebildet. Der Montagestutzen 7 weist eine Aufnahmevertiefung 10 zur Aufnahme des Endbereiches 5 des Rohres 3 auf.

Die Aufnahmevertiefung 10 ist im von der Bodenfläche abgewandten Endbereich als Innenkonus ausgebildet und weist eine Längsachse 13, eine sich in eine Einführrichtung 14 des Rohres 3 verjüngende Wandung 15, eine Öffnung 16, durch die das Rohr 3 einführbar ist, sowie eine Bodenfläche 17 auf. Die Bodenfläche 17 ist bei diesem Ausführungsbeispiel gleichzeitig die Anschlagfläche 35, an der die Stirnfläche 6 des Rohres 3 vollständig anlegbar ist.

Der Werkzeugträger 8 weist einen RFID-Transponder - nicht dargestellt - auf. Die als Durchgangskanäle ausgebildeten Spalte 26 erstrecken sich von der Anschlagfläche 35 bzw. der Bodenfläche 17 des Montagestutzens 7 durch diesen sowie durch den Werkzeugträger 8 hindurch bis zur Außenseite der Vorrichtung 1.

Die als Durchgangskanäle ausgebildeten Spalte 26 sind jeweils derart angeordnet, dass sie durch die Stirnfläche 6 des Rohres 3 verschließbar sind, wenn die Stirnfläche 6 vollständig an der Anschlagfläche 35 der Aufnahmevertiefung 10 anliegt. Die als Durchgangskanäle ausgebildeten Spalte 26 erstrecken sich in dem Vormontagestutzen 7 bei diesem Ausführungsbeispiel parallel zur Längsachse 13. Die Messeinrichtung 9 weist bei diesem Ausführungsbeispiel eine Pumpe und einen Durchflussmesser - nicht dargestellt - auf.

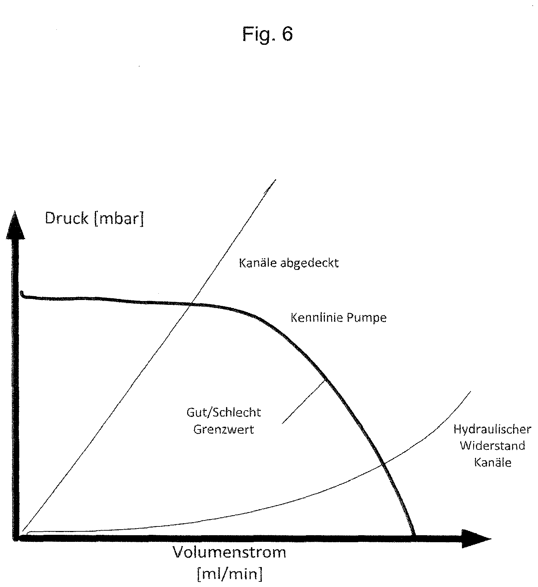

In Fig. 6 ist eine Volumenstrom-Druck-Kennlinie zur Definition von Grenzwerten bei einer Vorrichtung 1 gemäß Fig. 3 dargestellt. Der Grenzwert stellt den Druck dar bis zu dem eine zuverlässige Schneidringverbindung herstellbar ist. Man erkennt aus dem Diagramm den mit dem Drucksensor am Pumpenausgang messbaren Druckverlauf bei vollständig geschlossenen Durchgangskanälen (links), teilweise verschlossenen Durchgangskanälen (mittlerer Bereich) und offenen Durchgangskanälen (rechter Bereich). Bei offenen Durchgangskanälen wird der gemessene Druck durch den hydraulischen Widerstand der Kanäle bestimmt.

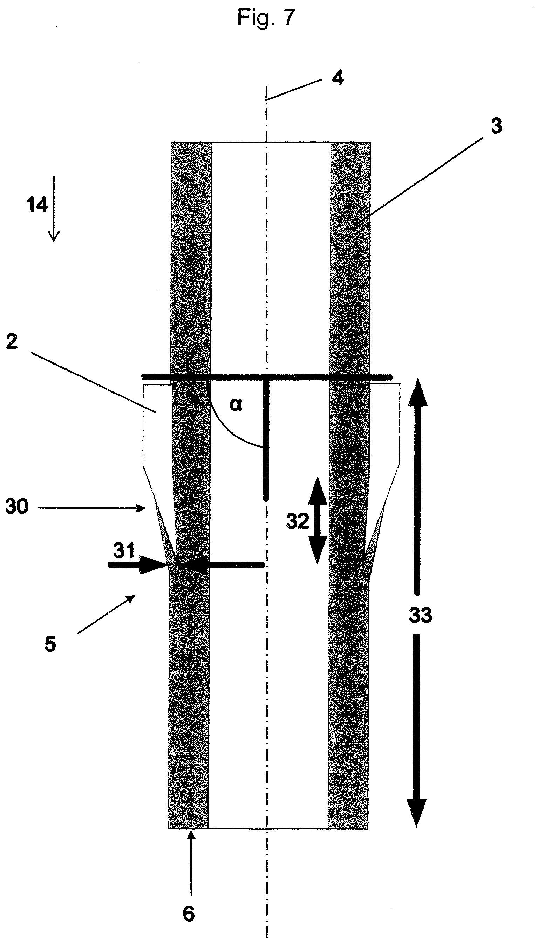

In Fig. 7 ist ein Rohr 3 nach dem Montagevorgang des Schneidrings 2, d. h. ein Rohr 3 mit einer Schneidringverbindung 30, gezeigt. Bei der mittels der erfindungsgemäßen Vorrichtung 1 hergestellten Schneidringverbindung 30 handelt es sich um eine, insbesondere hinsichtlich Dichtigkeit, zuverlässige Schneidringverbindung 30. Dabei sind die für die Ausbildung einer Schneidringverbindung 30 maßgeblichen Montageparameter von der Vorrichtung 1 vorgebbar. Die Anlage des Rohres 3 an der Anschlagfläche 35 im Montagestutzen 7 ist dabei wie oben beschrieben schergestellt. Insbesondere ist der Schneidring 2 koaxial zur Rohrlängsachse 4 montiert, was mit einem Winkel α von 90° ausgedrückt wird. Weitere Parameter, wie z. B. Eindringtiefe 31, Schneidweg 32 und Abstand der Stirnfläche 6 des Rohres 3 vom Schneidring 2, Grenzdrücke oder Kapazitätsänderungsgrenzen, sind in der Auswerteeinheit 23 oder in dem RFID-Transponder des Werkzeugträgers 8 hinterlegbar.

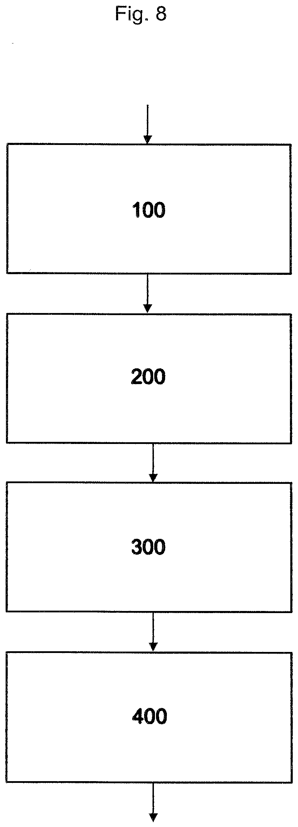

Fig. 8 zeigt ein Ausführungsbeispiel eines schematischen Ablaufs des Verfahrens zur Montage eines Schneidrings 2 an einem Rohr 3, aufweisend folgende Verfahrensschritte:
- Aufstecken 100 eines zu montierenden Schneidrings 2, aufweisend zumindest eine Schneidkante, auf einen Endbereich 5 eines Rohres 3 mit einer Rohrlängsachse 4 und einer am Endbereich 5 ausgebildeten Stirnfläche 6,
- Einführen 200 des Endbereichs 5 mitsamt dem Schneidring 2 in eine Aufnahmevertiefung 10 eines Montagestutzens 7 in einer Einführrichtung 14, wobei die Aufnahmevertiefung 10 eine mittlere Längsachse 13 und eine Wandung 15 aufweist,
- Beaufschlagen 300 des Schneidrings 2 mit einer, vorzugsweise von einer Presseinrichtung erzeugten, Montagekraft, so dass die Schneidkante des Schneidrings 2 in das Rohr 3 eindringt,
- wobei vor dem Beaufschlagen 300 des Schneidrings 2 mit einer Montagekraft ein Erfassen 400 einer Lage des Rohres 3 in Bezug auf den Montagestutzen 7, insbesondere die Lage der Stirnfläche 6 in Bezug auf eine Anschlagfläche 35, mit einer Messeinrichtung 9 erfolgt.

### Bezugszeichenliste

- 1: Vorrichtung
- 2: Schneidring
- 3: Rohr
- 4: Rohrlängsachse
- 5: Endbereich
- 6: Stirnfläche
- 7: Montagestutzen
- 8: Werkzeugträger
- 9: Messeinrichtung
- 10: Aufnahmevertiefung
- 11: Unterseite des Montagestutzens
- 12: Werkzeugträgeraufnahme
- 13: Längsachse
- 14: Einführrichtung
- 15: Wandung
- 16: Öffnung
- 17: Bodenfläche
- 18: Anschlagelement
- 19: Vorsprung
- 20: Lagerfläche
- 21: Zapfen
- 22: Sensor
- 23: Auswerteeinheit
- 24: Wellfeder
- 25: Schraube
- 26: Spalt
- 27: Leiterplatte
- 28: Elektrode
- 29: Elektrode
- 30: Schneidringverbindung
- 31: Eindringtiefe
- 32: Schneidweg
- 33 34: Überwurfmutter
- 35: Anschlagfläche

- 100: Aufstecken
- 200: Einführen
- 300: Beaufschlagen
- 400: Erfassen

## Patentansprüche

1. Vorrichtung (1) zur Montage eines Schneidrings (2), aufweisend einen Montagestutzen (7) mit einer Aufnahmevertiefung (10) zur Aufnahme eines Endbereichs (5) eines Rohres (3) mit einer Stirnfläche (6) sowie eines auf den Endbereich (5) aufschiebbaren und auf dem Rohr (3) zu montierenden Schneidrings (2), wobei eine Messeinrichtung (9) vorhanden ist,
**dadurch gekennzeichnet, dass**
die Messeinrichtung (9) zum Erfassen einer Lage eines in die Aufnahmevertiefung (10) eingeführten Rohres (3) in Bezug auf den Montagestutzen (7) ausgebildet und eingerichtet ist, dass in der Aufnahmevertiefung (10) mindestens eine Anschlagfläche (35) vorhanden ist, dass die Messeinrichtung (9) zum Erfassen zumindest des Anliegens der Stirnfläche (6) des Rohres (3) an der Anschlagfläche (35) ausgebildet ist, und dass die Messeinrichtung zum Erfassen eines Anlageumfangs eingerichtet und ausgebildet ist.

2. Vorrichtung (1) nach Anspruch 1,
**dadurch gekennzeichnet, dass**
der Montagestutzen (7) mindestens einen Spalt (26) aufweist, dass der Spalt (26) mit einem in die Aufnahmevertiefung (10) eingeführten Rohr (3) mittelbar oder unmittelbar zumindest teilweise verschließbar ist, und dass die Messeinrichtung (9) zur Erfassung eines Schließzustandes des Spaltes (26) ausgebildet ist.

3. Vorrichtung (1) nach Anspruch 1 oder 2,
**dadurch gekennzeichnet, dass**
die Messeinrichtung (9) einen Abstandssensor (22) aufweist, insbesondere dass der Abstandssensor (22) ein kapazitiver Sensor ist.

4. Vorrichtung (1) nach den Ansprüchen 2 und 3,
**dadurch gekennzeichnet, dass**
der Abstandssensor (22) dem Spalt (26) zugeordnet ist, dass mit dem Abstandssensor (22) der Schließzustand des Spaltes (26) ermittelbar ist.

5. Vorrichtung (1) nach einem der Ansprüche 2 bis 4,
**dadurch gekennzeichnet, dass**
in der Aufnahmevertiefung (10) ein Anschlagelement (18) gehalten ist, dass der Spalt (26) zwischen Anschlagelement (18) und Montagestutzen (7) ausgebildet ist, und dass der Schließzustand des Spaltes (26) durch Krafteinwirkung des Rohres (3) auf das Anschlagelement (18) beeinflussbar ist.

6. Vorrichtung (1) nach Anspruch 5,
**dadurch gekennzeichnet, dass**
das Anschlagelement (18) unter Wirkung einer Feder (24), insbesondere einer Wellfederscheibe, in der Aufnahmevertiefung (10) gehalten ist.

7. Vorrichtung (1) nach Anspruch 1 oder 2,
**dadurch gekennzeichnet, dass**
die Messeinrichtung (9) mindestens eine Pumpe und einen Drucksensor und/oder einen Durchflussmesser aufweist.

8. Vorrichtung (1) nach Anspruch 1 oder 2 oder Anspruch 7,
**dadurch gekennzeichnet, dass**
der Spalt (26) als mindestens ein Durchgangskanal ausgestaltet ist, der sich ausgehend von einer Bodenfläche (17) der Aufnahmevertiefung (10) durch den Montagestutzen (7) nach außen erstreckt, wobei der Durchgangskanal derart ausgebildet ist, dass er durch die Stirnseite (6) des in die Aufnahmevertiefung (10) eingeführten Rohres (3) verschließbar ist.

9. Vorrichtung (1) nach Anspruch 7 und 8,
**dadurch gekennzeichnet, dass**
die Pumpe mit dem Durchgangskanal in Verbindung steht, so dass mit der Pumpe eine Luftströmung erzeugbar ist, die den Durchgangskanal durchströmen kann, wobei mit dem Drucksensor ein Druckanstieg oder mit dem Durchflussmesser eine Änderung der Durchflussrate ermittelbar ist, wenn der Durchgangskanal durch die Rohrleitung (3) zumindest teilweise verschlossen ist.

10. Vorrichtung (1) nach einem der Ansprüche 1 bis 9,
**dadurch gekennzeichnet, dass**
die Messeinrichtung (9) ein Zustandssignal erzeugt, und dass die Montage des Schneidrings (2) an dem Rohr (3) auf Basis des Zustandssignals gesteuert wird, insbesondere dass ein Steuergerät vorhanden ist, und dass Zustandssignal mit dem Steuergerät verarbeitbar und die Montage mit dem Steuergerät gesteuert wird.

11. Vorrichtung (1) nach Anspruch 8,
**dadurch gekennzeichnet, dass**
basierend auf dem Zustandssignal ein optisches und/oder akustisches Informationssignal für eine Bedienperson bezüglich der Lage des Rohres (3) in Bezug auf den Montagestutzen (7) erzeugt wird.

12. Verfahren zur Montage eines Schneidrings (2) an einem Rohr (3), vorzugsweise unter Verwendung einer Vorrichtung nach einem der Ansprüche 1 bis 11, aufweisend folgende Verfahrensschritte:
- Aufstecken (100) eines zu montierenden Schneidrings (2), aufweisend zumindest eine Schneidkante, auf einen Endbereich (5) eines Rohres (3) mit einer Rohrlängsachse (4) und einer am Endbereich (5) ausgebildeten Stirnfläche (6),
- Einführen (200) des Endbereichs (5) mitsamt dem Schneidring (2) in eine Aufnahmevertiefung (10) eines Montagestutzens (7) in einer Einführrichtung (14), wobei die Aufnahmevertiefung (10) eine mittlere Längsachse (13) und eine Wandung (15) aufweist,
- Beaufschlagen (300) des Schneidrings (2) mit einer, vorzugsweise von einer Presseinrichtung erzeugten, Montagekraft, so dass die Schneidkante des Schneidrings (2) in das Rohr (3) eindringt,
**dadurch gekennzeichnet, dass**
- vor dem Beaufschlagen (300) des Schneidrings (2) mit einer Montagekraft ein Erfassen (400) einer Lage des Rohres (3) in Bezug auf den Montagestutzen (7) mit einer Messeinrichtung (9) durch Erfassen des Anlageumfangs der Stirnfläche (6) der Rohrleitung (3) an einer Anschlagsfläche (17, 35) in der Aufnahmevertiefung (10) erfolgt.

13. Verfahren nach Anspruch 12,
**dadurch gekennzeichnet, dass**
das Beaufschlagen (300) des Schneidrings (2) mit einer Montagekraft ausgelöst oder freigegeben wird, wenn die Messeinrichtung (9) ein vollständiges Anliegen der Stirnfläche (6) des Rohres (3) an einer Anschlagfläche (17, 35) in der Ausnahmevertiefung (10) erfasst.

14. Verfahren nach einem der Ansprüche 12 oder 13,
**dadurch gekennzeichnet, dass**
die Messeinrichtung (9) die Anlage der Stirnfläche (6) der Rohrleitung (3) an der Anschlagfläche (17) mit einem kapazitiven Sensor erfasst.

15. Verfahren nach einem der Ansprüche 12 oder 13,
**dadurch gekennzeichnet, dass**
die Anlage der Stirnfläche (6) der Rohrleitung (3) an der Anschlagfläche (17, 35) als Änderung eines mit einer Pumpe erzeugten Druckes mit der Messeinrichtung (9), insbesondere mit einem Drucksensor, erfasst wird.

## Claims

1. Apparatus (1) for fitting a cutting ring (2), having a fitting connecting piece (7) which has a receiving depression (10), which receiving depression serves for receiving an end region (5) of a tube (3), having a face surface (6), and a cutting ring (2), which is able to be pushed onto the end region (5) and is to be fitted on the tube (3), wherein a measurement device (9) is provided,
**characterized in that**
the measurement device (9) is designed and configured to detect a position of a tube (3), inserted into the receiving depression (10), in relation to the fitting connecting piece (7), **in that** at least one stop surface (35) is provided in the receiving depression (10), **in that** the measurement device (9) is designed to detect at least the abutment of the face surface (6) of the tube (3) against the stop surface (35), and **in that** the measurement device is configured and designed to detect an extent of abutment.

2. Apparatus (1) according to Claim 1,
**characterized in that**
the fitting connecting piece (7) has at least one gap (26), **in that** the gap (26) is able to be at least partially closed off indirectly or directly by a tube (3) inserted into the receiving opening (10), and **in that** the measurement device (9) is designed to detect a closed state of the gap (26).

3. Apparatus (1) according to Claim 1 or 2,
**characterized in that**
the measurement device (9) has a distance sensor (22), in particular **in that** the distance sensor (22) is a capacitive sensor.

4. Apparatus (1) according to Claims 2 and 3,
**characterized in that**
the distance sensor (22) is assigned to the gap (26), and **in that** the closed state of the gap (26) is able to be determined by way of the distance sensor (22).

5. Apparatus (1) according to one of Claims 2 to 4,
**characterized in that**
a stop element (18) is held in the receiving depression (10), **in that** the gap (26) is formed between the stop element (18) and the fitting connecting piece (7), and **in that** the closed state of the gap (26) is able to be influenced by action of force of the tube (3) on the stop element (18).

6. Apparatus (1) according to Claim 5,
**characterized in that**
the stop element (18) is held in the receiving depression (10) under the action of a spring (24), in particular a wave spring washer.

7. Apparatus (1) according to Claim 1 or 2,
**characterized in that**
the measurement device (9) has at least one pump and one pressure sensor and/or one throughflow meter.

8. Apparatus (1) according to Claim 1 or 2 or Claim 7,
**characterized in that**
the gap (26) is in the form of at least one passage channel which, proceeding from a base surface (17) of the receiving depression (10), extends outwards through the fitting connecting piece (7), wherein the passage channel is formed such that it is able to be closed off by the face side (6) of the tube (3) inserted into the receiving depression (10).

9. Apparatus (1) according to Claim 7 and 8,
**characterized in that**
the pump is connected to the passage channel such that an air flow is able to be generated by the pump, which air flow is able to flow through the passage channel, wherein, by way of the pressure sensor, a pressure increase or, by way of the throughflow meter, a change in the throughflow rate is able to be determined when the passage channel is at least partially closed off by the tubing (3).

10. Apparatus (1) according to one of Claims 1 to 9,
**characterized in that**
the measurement device (9) generates a state signal, and **in that** the fitting of the cutting ring (2) on the tube (3) is controlled on the basis of the state signal, in particular **in that** a control unit is provided, and **in that** the state signal is able to be processed by the control unit and the fitting is controlled by the control unit.

11. Apparatus (1) according to Claim 8,
**characterized in that**
an optical and/or acoustic information signal for an operator with regard to the position of the tube (3) in relation to the fitting connecting piece (7) is generated on the basis of the state signal.

12. Method for fitting a cutting ring (2) on a tube (3), preferably using an apparatus according to one of Claims 1 to 11, comprising the following method steps:
- plugging (100) of a cutting ring (2) which is to be fitted and has at least one cutting edge onto an end region (5) of a tube (3) which has a tube longitudinal axis (4) and has a face surface (6) formed on an end region (5),
- inserting (200) the end region (5) together with the cutting ring (2) into a receiving depression (10) of a fitting connecting piece (7) in a direction of insertion (14), wherein the receiving depression (10) has a central longitudinal axis (13) and a wall (15),
- applying (300) a fitting force, preferably generated by a pressing device, to the cutting ring (2) such that the cutting edge of the cutting ring (2) penetrates the tube (3), **characterized in that,**
- prior to applying (300) a fitting force to the cutting ring (2), a step of detecting (400) a position of the tube (3) in relation to the fitting connecting piece (7) is realized by a measurement device (9) by detecting the extent of abutment of the face surface (6) of the tube (3) against an abutment surface (17, 35) in the receiving depression (10).

13. Method according to Claim 12,
**characterized in that**
the step of applying (300) a fitting force to the cutting ring (2) is triggered or enabled when the measurement device (9) detects a complete abutment of the face surface (6) of the tube (3) against a stop surface (17, 35) in the receiving depression (10) .

14. Method according to either of Claims 12 and 13, **characterized in that**
the measurement device (9) detects the abutment of the face surface (6) of the tube (3) against the stop surface (17) by way of a capacitive sensor.

15. Method according to either of Claims 12 and 13,
**characterized in that**
the abutment of the face surface (6) of the tube (3) against the stop surface (17, 35) is detected by the measurement device (9), in particular by a pressure sensor, as a change in a pressure generated by a pump.

## Revendications

1. Arrangement (1) de montage d'une bague coupante (2), comprenant un manchon de montage (7) pourvu d'une cavité d'accueil (10) destinée à accueillir une zone d'extrémité (5) d'un tube (3) ayant une face frontale (6) ainsi qu'une bague coupante (2) pouvant être emmanchée sur la zone d'extrémité (5) et à monter sur le tube (3), un dispositif de mesure (9) étant présent,
**caractérisé en ce que**
le dispositif de mesure (9) est configuré et conçu pour détecter une position du tube (3) introduit dans la cavité d'accueil (10)par rapport au manchon de montage (7), **en ce qu'**au moins une surface de butée (35) est présente dans la cavité d'accueil (10), **en ce que** le dispositif de mesure (9) est configuré pour détecter au moins l'appui de la surface frontale (6) du tube (3) contre la surface de butée (35) et **en ce que** le dispositif de mesure est configuré et conçu pour détecter une portée de l'appui.

2. Arrangement (1) selon la revendication 1, **caractérisé en ce que** le manchon de montage (7) possède au moins une fente (26), **en ce que** la fente (26) peut être au moins partiellement fermée directement ou indirectement par un tube (3) introduit dans la cavité d'accueil (10), **en ce que** le dispositif de mesure (9) est configuré pour détecter un état fermé de la fente (26).

3. Arrangement (1) selon la revendication 1 ou 2, **caractérisé en ce que** le dispositif de mesure (9) possède un capteur d'écart (22), notamment **en ce que** le capteur d'écart (22) est un capteur capacitif.

4. Arrangement (1) selon les revendications 2 et 3, **caractérisé en ce que** le capteur d'écart (22) est associé à la fente (26), **en ce que** l'état fermé de la fente (26) peut être déterminé avec le capteur d'écart (22).

5. Arrangement (1) selon l'une des revendications 2 à 4, **caractérisé en ce que** la cavité d'accueil (10) contient un élément de butée (18), **en ce que** la fente (26) est formée entre l'élément de butée (18) et le manchon de montage (7), et **en ce que** l'état fermé de la fente (26) peut être influencé par l'action de la force du tube (3) sur l'élément de butée (18).

6. Arrangement (1) selon la revendication 5, **caractérisé en ce que** l'élément de butée (18) est maintenu dans la cavité d'accueil (10) sous l'effet d'un ressort (24), notamment d'une rondelle ondulée.

7. Arrangement (1) selon la revendication 1 ou 2, **caractérisé en ce que** le dispositif de mesure (9) possède au moins une pompe et un capteur de pression et/ou un débitmètre.

8. Arrangement (1) selon la revendication 1 ou 2 ou la revendication 7, **caractérisé en ce que** la fente (26) est réalisée sous la forme d'au moins un canal de passage qui s'étend vers l'extérieur à partir d'une surface de fond (17) de la cavité d'accueil (10) en passant par le manchon de montage (7), le canal de passage étant configuré de telle sorte qu'il peut être fermé par le côté frontal (6) du tube (3) introduit dans la cavité d'accueil (10).

9. Arrangement (1) selon les revendications 7 et 8, **caractérisé en ce que** la pompe se trouve en liaison avec le canal de passage, de sorte qu'un écoulement d'air peut être généré avec la pompe, lequel peut passer à travers le canal de passage, une augmentation de pression pouvant être déterminée avec le capteur de pression ou une variation du débit avec le débitmètre lorsque le canal de passage est au moins partiellement fermé par la conduite tubulaire (3).

10. Arrangement (1) selon l'une des revendications 1 à 9, **caractérisé en ce que** le dispositif de mesure (9) génère un signal d'état, et **en ce que** ce montage de la bague coupante (2) sur le tube (3) est commandé sur la base du signal d'état, notamment **en ce qu'**un contrôleur est présent, et **en ce que** le signal d'état peut être traité par le contrôleur et le montage est commandé par le contrôleur.

11. Arrangement (1) selon la revendication 8, **caractérisé en ce qu'**un signal d'information visuel et/ou sonore est généré pour un opérateur sur la base du signal d'état, concernant la position du tube (3) en référence au manchon de montage (7).

12. Procédé de montage d'une bague coupante (2) sur un tube (3), de préférence en utilisant un arrangement (1) selon l'une des revendications 1 à 11, comprenant les étapes suivantes :
- emmanchement (100) d'une bague coupante (2) à monter, possédant au moins une arête de coupe, sur une zone d'extrémité (5) d'un tube (3) ayant un axe longitudinal de tube (4) et une face frontale (6) formée au niveau d'une zone d'extrémité (5),
- introduction (200) de la zone d'extrémité (5) conjointement avec la bague coupante (2) dans une cavité d'accueil (10) d'un manchon de montage (7) dans une direction d'introduction (14), la cavité d'accueil (10) possédant un axe longitudinal (13) central et une paroi (15),
- sollicitation (300) de la bague coupante (2) avec une force de montage, de préférence générée par un dispositif de pressage, de sorte que l'arête de coupe de la bague coupante (2) pénètre dans le tube (3), **caractérisé en ce que**
- avant la sollicitation (300) de la bague coupante (2) avec une force de montage, une détection (400) d'une position du tube (3) par rapport au manchon de montage (7) est effectuée avec un dispositif de mesure (9) par détection de la portée de l'appui de la surface frontale (6) de la conduite tubulaire (3) contre une surface de butée (17, 35) dans la cavité d'accueil (10).

13. Procédé selon la revendication 12, **caractérisé en ce que** la sollicitation (300) de la bague coupante (2) avec une force de montage est déclenchée ou libérée lorsque le dispositif de mesure (9) détecte un appui complet de la surface frontale (6) du tube (3) contre une surface de butée (17, 35) dans la cavité d'accueil (10).

14. Procédé selon l'une des revendications 12 ou 13, **caractérisé en ce que** le dispositif de mesure (9) détecte l'appui de la surface frontale (6) de la conduite tubulaire (3) contre la surface de butée (17) avec un capteur capacitif.

15. Procédé selon l'une des revendications 12 ou 13, **caractérisé en ce que** l'appui de la surface frontale (6) de la conduite tubulaire (3) contre la surface de butée (17, 35) est détecté par le dispositif de mesure (9), notamment avec un capteur de pression, comme une modification d'une pression générée avec une pompe.
